# EUROPEAN PATENT SPECIFICATION

(11) **EP 3 327 358 B1**
(45) Date of publication and mention of the grant of the patent: **23.03.2022**
(21) Application number: 16200776.9
(22) Date of filing: 25.11.2016
(51) Int. Cl.: B32B 9/00, B32B 15/00, F24C 15/00

(54) **A CAVITY HAVING AN ENAMEL COATING, A COOKING APPLIANCE COMPRISING SUCH A CAVITY AND A METHOD FOR MANUFACTURING SUCH A CAVITY**
HOHLRAUM MIT EINER EMAILBESCHICHTUNG, KOCHGERÄT MIT SOLCH EINEM HOHLRAUM UND VERFAHREN ZUR HERSTELLUNG SOLCH EINES HOHLRAUMS
CAVITÉ AYANT UN REVÊTEMENT D'ÉMAIL, APPAREIL DE CUISSON COMPRENANT UNE TELLE CAVITÉ ET PROCÉDÉ DE FABRICATION D'UNE TELLE CAVITÉ

(43) Date of publication of application: 30.05.2018
(73) Proprietor: Electrolux Appliances Aktiebolag, 105 45 Stockholm (SE)
(72) Inventor: MICHEL, Herbert, 91541 Rothenburg ob der Tauber (DE); AYNUR, Gerede, 91541 Rothenburg ob der Tauber (DE); BÖCKLER, Marco, 91541 Rothenburg ob der Tauber (DE); EHNINGER, Christian, 91541 Rothenburg ob der Tauber (DE); WIESINGER, Richard, 91541 Rothenburg ob der Tauber (DE)
(74) Representative: Electrolux Group Patents

(56) References cited:
- EP-A1- 0 522 401
- EP-A1- 2 840 321
- EP-A2- 2 128 528
- DE-A1-102014 201 639
- GB-A- 665 903
- JP-A- 2005 200 726
- US-A1- 2003 059 600
- US-A1- 2011 049 122

## Description

The present invention relates to a cavity for a cooking appliance. Further, the present invention relates to such cooking appliance and a method of manufacturing a cavity for such cooking appliance.

Usually, the standard material used for welded components of cooking appliances, in particular for welded oven cavities, is low carbon steel that is coated with a so-called pyro or vitreous enamel that essentially consists of melted and fused glass powder. In order to manufacture such components, high burning temperatures from about 820 to 840°C are needed to apply the coating.

The document DE 10 2014 201 639 A1 shows an oven cavity having cavity walls, wherein the cavity walls are coated with materials which determine a surface function of the cavity walls.

The document US 2011/0049122 A1 discloses a cooking appliance with an enamel composition. The enamel composition includes a heat resistance, chemical resistance, wear resistance and pollution resistance, such that the cooking appliance withstands high temperature, acid or alkali and is readily cleaned.

It is an object of the present invention to provide a cavity and/or a cooking appliance comprising such cavity and a method of manufacturing such a cavity and/or cooking appliance having easy to clean properties and require less energy.

These and other problems are solved by the subject matter of the attached independent claims.

The first object of the invention is achieved by a cavity according to claim 1. A cavity for a cooking appliance, in particular an oven, comprises cavity walls defining a cooking chamber for cooking foodstuff, and a central opening for placing foodstuff into the cooking chamber. According to the present invention, at least one surface of at least one of the cavity walls is coated with a layer comprising aluminium. Said layer further comprises a first coating being made of an enamel having a low softening point.

In other words: The cavity walls are at least partially aluminised and/or comprise an aluminium layer. In principal, an inner and an outer surface of the cavity walls may be provided with a layer comprising aluminium completely or at least partially. The first coating is provided at least on these surface parts of the cavity walls, where the aluminium layer is present.

According to the present invention, however, the "inner surface" of a cavity wall is the surface directed to the heated or heatable cooking chamber defined by said cavity walls. Accordingly, an "outer surface" of a cavity wall is the surface facing away from said cooking chamber.

The cavity comprises cavity walls, which form a cooking chamber between them, into which foodstuff may be placed to be cooked or baked. For this purpose, the cooking chamber is defined by the cavity walls, usually comprising a left and a right side wall, a bottom wall and an upper wall, a rear wall and a front wall, whereby one of the cavity walls, usually the front wall comprises a central opening for placing the foodstuff into the cooking chamber. The central opening may be closed or opened, respectively, by a door. The person skilled in the art also knows other configurations of such cavity.

The cavity may comprise further components that are provided to be attached to the cavity walls, for example backing trays or grids. Even these further components may have a comparable structure to the cavity walls, thus at least one surface of such accessory components may be coated with a layer comprising aluminium, wherein said layer further comprises a coating being made of a enamel having a low softening point.

The components of the cavity, thus the cavity walls and/or further accessory components, may be integrally formed or may comprise several parts that are provided to be joined together to form a shaped structure, such as the heatable oven cavity, its frontframe or any component thereof.

The idea of the present invention is to use cavity walls made of a base material that is aluminized or at least partially coated with an aluminum layer. The aluminum layer or aluminized parts of the cavity walls are further enameled with an enamel having a low softening point, respectively a low glass transition temperature, in particular an aluminium enamel. The softening point is defined as a temperature, respectively a temperature range, at which the material, e.g. the enamel turns from its hard and relatively brittle state into a molten or rubber-like state when temperature is increased. Therefore an enamel having a low softening point, a so-called "low-temperature enamel", can be applied to the surface of the cavity walls at lower burning temperatures.

According to the invention, the first coating is an enamel having a softening point between 450°C and 560°C. As the burning temperature is therefore strongly reduced in comparison to enamels used in the prior art for cavities, e.g. pyro or vitreous enamel that consists of melted and fused glass powder that require firing at high temperatures from about 820 to 840°C, energy required for coating the cavity walls is significantly reduced.

It is generally advantageous, if the first coating is a nonstick and easy to clean enamel. In a preferred embodiment, the first coating, respectively enamel comprises aluminium, in particular aluminium oxide. In this case, the bonding and the adhesion of the first coating, namely the aluminium enamel, to the surface of at least one of the cavity walls that is coated with a layer comprising aluminium, is strongly increased.

In a further preferred embodiment, the first coating comprises polytetrafluoroethylene in order to further simplify the cleaning of the cavity. As the first coating respectively the enamel does not require high burning temperatures during the manufacturing process, the polytetrafluoroethylene is not destroyed.

The cavity walls can be made of any sheet steel, thus a material comprising mainly iron and carbon that is suitable to form three-dimensionally shaped components of a cooking appliance. In particular, the cavity walls are made of low carbon sheet steel, thus the base material of the cavity walls is low carbon steel. At least one surface of the cavity walls is coated with the aluminium layer, respectively aluminised. In other words: An aluminised steel sheet is used for the cavity walls.

The layer preferably comprises an aluminium oxide layer and an intermetallic layer comprising aluminium and iron. Therefore the basic structure of the cavity walls is a thin aluminium oxide layer outside, an intermetallic layer, e.g. a mix of aluminium, silicon and iron, and finally a steel core. The aluminium oxide layer may further protect the cavity walls against corrosion.

Preferably, the surface of the at least one of the cavity walls that is coated with an aluminium layer or aluminized and that is further provided with a first coating is an inner surface of the cavity walls. Such a coating respectively an enamel on the inner surface of the cavity which comes into contact with the foodstuff, especially the bottom wall of the cavity, has the advantage that the cooking chamber can be cleaned in an easy and user-friendly way.

In an advantageous embodiment, an outer surface of at least one of the cavity walls, in particular all cavity walls, comprises a second coating. The second coating may be applied, e.g. spraypainted, on the outside of the cavity selectively, e.g. in areas near heating elements, or the outside of a cavity wall may be entirely coated with the second coating. Such a coating on the outer surface reduces heat emission to the outside from the inside of the cavity. Even further components that are attached to the cavity walls may comprise a second coating on their outer side.

Preferably, the second coating comprises a reflective material having a low emissivity. The term "emissivity" as used herein, preferably refers to the effectiveness of a surface and/or of its material in emitting energy as thermal radiation. The term "low emissivity" as used herein, refers to an emissivity of the second coating, particularly the reflective material that is about 0.2 to 0.3. Such a coating reflects the heat that radiates from the heated oven cavity so that the energy consumption of the oven during its cooking operation is reduced.

The second coating preferably comprises aluminium, for example in form of small aluminium particles. Such small particles have a low emissivity even when they are oxidized particles. An aluminium coating on the outer surface of the cavity has the additional advantage that it protects the cavity walls from corrosion.

A thickness of the layer comprising aluminium is in particular between 15 and 25µm and/or a thickness of the first coating is in particular between 30 and 60µm and/or a thickness of the second coating is in particular between 30 and 60µm.

The second object of the invention is achieved by a cooking appliance according to claim 11.

Such a cooking appliance, in particular an oven comprises a heatable cavity, heating elements for heating said cavity, and a door for closing and opening the cavity, in particular for closing and opening a central opening of the cavity, wherein the heatable cavity is a cavity according to any one of the claims 1 to 10.

For example, a cooking appliance and/or the cavity according to the present invention is a cooking and/or baking device for cooking and/or baking of foodstuff. Such cooking appliance, preferably a cooking and/or baking device, may particularly be a cooking appliance selected from the group comprising an oven, baking oven, microwave, steam-oven, and steam-cooker.

The third object of the invention is achieved by a method of manufacturing a cavity for a cooking appliance, in particular an oven, according to claim 12.

Such method of manufacturing a cavity for a cooking appliance, in particular an oven, comprises at least the following steps: At least one cavity wall having at least one surface that is coated with a layer comprising aluminium is provided in a first step. In a second step, the cavity is provided by joining together the cavity walls together by laser welding. Even further components of the cavity, such as its frontframe or housing parts that surround the cavity walls are joined together to each other and/or to the cavity walls by laser welding.

Cavity walls having a surface that is coated with a layer comprising aluminium, for example an aluminized sheet steel, could not have been used in the past. In previous welding concepts, ohmic resistance welding has been used for connecting the cavity walls and if necessary further components. Thereby the surface structure of the cavity walls and thus the coating respectively the layer comprising aluminium would be destroyed as the heat affected zone is large. In this case, applying a coating to the cavity wall afterwards is not possible, respectively a proper enamel could not be created on such damaged surfaces. Therefore only steel as base material for the cavity walls without any coating or enamel was used so far.

According to the method according to the present invention, the main difference and an important advantage is to use laser welding so that the welding process can be carried out although at least one surface of at least one of the cavity walls is provided with a layer comprising aluminium. This is due to the fact that the material is affected in a lesser extent by using laser welding, so that the heat input into the material is much smaller. Therefore the coating, respectively the aluminium layer is not damaged or destroyed during the welding process. Furthermore the weld can be created more precisely and with smaller dimension by using laser welding.

In particular, the surface of the cavity wall that comprises the aluminium layer is preferably an inner surface of the cavity and the laser is welding the cavity walls from an outer side. The laser welding can be controlled in such a way that the temperature of the surface of at least the inner surface of the cavity walls can be effectively kept at a low temperature at which the aluminium coating or layer that faces the inside of the cavity is not damaged to any degree that would impair its subsequent coating with the first coating. As the penetration depth of the laser beam during the welding process is smaller than a thickness of the cavity wall and/or further components that are welded to the cavity wall, the inner surface and therefore the layer comprising aluminium is not influenced.

The first coating being made of an enamel having a low softening point is preferably applied to said layer after the components of the cavity have been welded together by means of a laser. As the aluminium layer is not damaged during the welding process, the first coating can be applied to the inner surface of the cavity walls without any problems or enamel defects.

In a preferred embodiment, the second coating may be provided on an outer surface of the cavity walls, wherein the second coating in particular comprises a reflective material, for example aluminium. In particular, the second coating may be provided on an outer surface of a further component that has been welded to the cavity walls. The second coating might be applied to the outer surface for example by wet spraying process.

The present invention will be described in further detail with reference to the drawings, in which
- FIG 1: illustrates a schematic view of a cooking appliance according to an embodiment of the present invention, and
- FIG 2: illustrates a cross-sectional view of a cavity wall in detail, and
- FIG 3: illustrates a method for providing a cavity by use of laser welding.

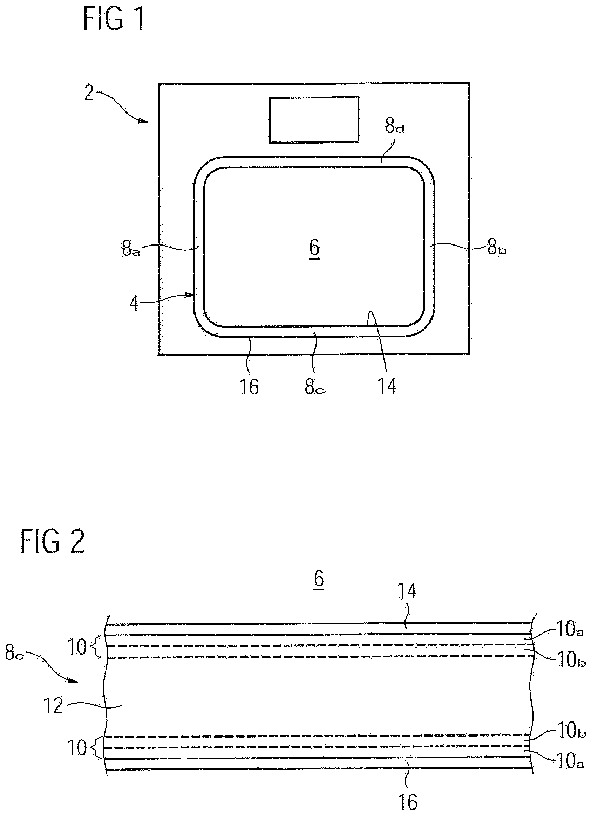

Fig. 1 illustrates a schematic view of a cooking appliance 2, exemplary an oven. Such cooking appliance 2 comprises a heatable cavity 4 according to the present invention. The cavity 4 comprises cavity walls which define a cooking chamber 6 into which foodstuff may be placed for cooking or baking. The cooking chamber 6 is defined by the cavity walls, usually comprising a left and a right side wall, 8a and 8b, respectively, a bottom wall 8c and an upper wall 8d and a rear wall and a front wall, which are not shown in Fig. 1. One of the cavity walls, usually the front wall comprises a central opening for placing the foodstuff into the cooking chamber 6. The central opening may be closed or opened by a door that may be a part of the front wall. The cooking appliance 2 usually further comprises also heating elements (not shown in Fig. 1) for heating the cooking chamber 6 and therefore heating food that has been placed therein to be cooked. Such heating elements may be disposed at one of the cavity walls.

Fig. 2 illustrates a part of a cavity 4 according to the present invention, exemplary a part of the lower cavity wall 8c according to Fig. 1 in detail for improved illustration of the structure of the cavity walls of the cavity 4. The cavity walls 8a, 8b, 8c and 8d are made of low carbon steel and are entirely coated with a layer 10 that comprises aluminium. In other words: An aluminized steel sheet is used as a base material for the cavity walls. Said aluminium layer 10 comprises two aluminium layers having different composition, namely an aluminium oxide layer 10a on the outer side of the cavity wall 8c and an intermetallic layer 10b, e.g. a mix of iron and aluminium between the aluminium oxide layer 10a and the steel core 12. The aluminium layer 10 shows a thickness of about 15 to 25µm. According to Fig. 2, both, an inner surface, thus the surface facing towards the cooking chamber 6, and an outer surface, thus the surface facing away from the cooking chamber, of the cavity wall 8c is coated with a layer of aluminium 10.

The inner surface of the cavity wall 8c, in particular the aluminium layer 10 is coated with a first coating 14 that is an enamel having a low softening point. The first coating 14 has a softening point below 560°C and comprises aluminium. As the first coating 14 is applied to the aluminium layer 10, respectively the aluminium oxide layer 10a, the bonding and adhesion of the first coating is increased. Furthermore, according to the low softening point, the burning temperatures that are required for applying the enamel to the cavity walls can be significantly reduced. Therefore, additionally or instead of an enamel comprising aluminium, a first coating 14 comprising polytetrafluoroethylene that shows in particular low adhesion of food particles and easy to clean properties may be used. The first coating 14 shows a thickness of about 30 to 60µm.

The outer surface of the cavity walls, exemplary cavity wall 8c, is provided with a second coating 16 that comprises a reflective material having a low emissivity. As even the second coating 16 comprises aluminium, the bonding between the aluminium layer 10 of the cavity wall 8c and the second coating 16 is increased. The second coating 16 reflects the heat that radiates from the heated oven cavity 4 so that the energy consumption of the cooking appliance 2, in particular an oven, during its cooking operation is reduced. A further important advantage is that the second coating 16 on the outer surface of the cavity wall protects the latter against corrosion. The second coating 16 shows a thickness of about 30 to 60µm.

Although the structure and the coatings 14, 16 are described exemplary for bottom cavity wall 8c, each of the other cavity walls may made of aluminized sheet steel and may comprise a first coating 14 and/or a second coating 16 section by section or in particular on their entire surface. If the cavity comprises further components, they may have a comparable structure to the cavity walls, thus a steel core, at least one aluminium layer and a first and/or second coating.

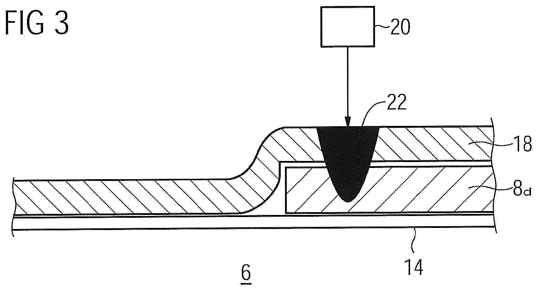

Fig. 3 illustrates a method for providing a cavity 4 for a cooking appliance 2, exemplary an oven, by use of laser welding. Firstly the cavity wall, un upper cavity wall 8d is exemplary shown, made of aluminized steel sheet, respectively having an aluminium layer 10 on both sides, namely on its inner surface and its outer surface, is provided. In a following step, the cavity walls 8a, 8b, 8c, 8d are joined together by laser welding (not shown). Even further components, exemplary a housing part 18 is joined to the cavity walls, exemplary shown for the cavity wall 8d.

The laser 20 for welding the components is positioned at an outer side of the cavity 4, thus on the side that faces away from the cooking chamber 6, in order to weld the cavity parts, thus the cavity wall 8d and the housing part 18 from an outer side. As can be seen in Fig. 3, the penetration length of the laser and the length of the weld 22 is smaller than the thickness of the cavity wall 8d and the housing part 18 so that the inner side of the cavity wall 8d and therefore the aluminium layer 10 is not damaged during the welding process.

In a subsequent step, a first coating 14 is applied at least to the surface that comprises the aluminium layer 10 and that has not been destroyed during the laser welding process. The first coating 14 is an enamel having a low softening point and comprises aluminium in order to achieve a strong bonding and adhesion to the surface of the cavity wall 8d. The first coating 14 is provided on the inner surface of the cavity 4. The first coating 14 is also applied partially to an inner surface of the housing part 18 that has been welded to the cavity wall 8d. The second coating 16 may be applied to the cavity wall 8d and/or afterwards to an outer surface of the housing part 18.

The above mentioned explanations described exemplary for upper cavity wall 8d are also valid for the further cavity walls 8a, 8b, 8c.

### List of reference numerals

- 2: cooking appliance
- 4: cavity
- 6: cooking chamber
- 8a: left cavity wall
- 8b: right cavity wall
- 8c: bottom cavity wall
- 8d: upper cavity wall
- 10: layer comprising aluminium
- 10a: aluminium oxide layer
- 10b: intermetallic layer
- 12: steel core
- 14: first coating
- 16: second coating
- 18: housing part
- 20: laser
- 22: weld

## Claims

1. Oven cavity (4) for a cooking appliance (2), wherein the oven cavity (4) comprises
- cavity walls (8a, 8b, 8c, 8d) defining a cooking chamber (6) for cooking foodstuff, and
- a central opening for placing foodstuff into the cooking chamber (6),
wherein
- at least one surface of at least one of the cavity walls (8a, 8b, 8c, 8d) is coated with a layer (10) comprising aluminium, **characterized in that** said layer (10) is coated with a first coating (14) being made of an enamel having a softening point between 450°C and 560°C.

2. The cavity (4) according claim 1,
**characterised in that**
the first coating (14) comprises aluminium.

3. The cavity (4) according to any one of the preceding claims, **characterised in that**
the first coating (14) comprises polytetrafluoroethylene.

4. The cavity (4) according to any one of the preceding claims, **characterised in that**
the cavity walls (8a, 8b, 8c, 8d) are made of low carbon sheet steel.

5. The cavity (4) according to any one of the preceding claims, **characterised in that**
the layer (10) comprises an aluminium oxide layer (10a) and an intermetallic layer (10b) comprising aluminium and iron.

6. The cavity (4) according to any one of the preceding claims, **characterised in that**
said surface of the at least one of the cavity walls (8a, 8b, 8c, 8d) is an inner surface of the cavity walls (8a, 8b, 8c, 8d).

7. The cavity (4) according to any one of the preceding claims, **characterised in that**
an outer surface of at least one of the cavity walls (8a, 8b, 8c, 8d) comprises a second coating (16).

8. The cavity (4) according to claim 7,
**characterised in that**
the second coating (16) comprises a reflective material having a low emissivity.

9. The cavity (4) according to any of the claims 7 or 8, **characterised in that**
the second coating (16) comprises aluminium.

10. The cavity (4) according to any of the preceding claims, **characterised in that**
a thickness of the layer (10) comprising aluminium is between 15 and 25µm and/or a thickness of the first coating (14) is between/about 30 and 60µm and/or a thickness of the second coating (16) is between 30 and 60µm.

11. A cooking appliance (2), in particular an oven, comprising
- a heatable cavity (4),
- heating elements for heating said cavity (4), and
- a door for closing the cavity (4), in particular for closing a central opening of the cavity,
**characterised in that**
the heatable cavity (4) is a cavity (4) according to any one of the claims 1 to 10.

12. A method for manufacturing an oven cavity (4) for a cooking appliance (2) according to any one of the claims 1 to 10, comprising at least the following steps:
- providing at least one first cavity wall (8a, 8b, 8c, 8d) and at least one second cavity wall (8a, 8b, 8c, 8d), each having at least one surface that is coated with a layer (10) comprising aluminium,
- providing the cavity (4) by joining together the first cavity wall (8a, 8b, 8c, 8d) and the second cavity wall (8a, 8b, 8c, 8d) or by joining together the first cavity wall (8a, 8b, 8c, 8d) and a housing part (18) by means of laser welding;
- apply a first coating (14) being made of an enamel having a softening point between 450 deg and 560 deg to said layer (10) after the components of the cavity (4) have been welded together by means of a laser (20).

13. A method according to claim 12,
**characterised in that**,
said surface is an inner surface of the cavity (4) and the laser (20) is welding the cavity walls (8a, 8b, 8c, 8d) from an outer side.

## Patentansprüche

1. Ofenhohlraum (4) für ein Kochgerät (2), wobei der Ofenhohlraum (4) umfasst:
- Hohlraumwände (8a, 8b, 8c, 8d), die eine Kochkammer (6) zum Kochen von Nahrungsmitteln definieren, und
- eine zentrale Öffnung, um Nahrungsmittel in der Kochkammer (6) zu platzieren, wobei
- mindestens eine Oberfläche von mindestens einer der Hohlraumwände (8a, 8b, 8c, 8d) mit einer Aluminium umfassenden Schicht (10) beschichtet ist, **dadurch gekennzeichnet, dass** diese Schicht (10) mit einer ersten Beschichtung (14) beschichtet ist, die aus einer Emaille mit einem Erweichungspunkt zwischen 450 °C und 560 °C gefertigt ist.

2. Hohlraum (4) nach Anspruch 1, **dadurch gekennzeichnet, dass** die erste Beschichtung (14) Aluminium umfasst.

3. Hohlraum (4) nach einem der vorhergehenden Ansprüche, **dadurch gekennzeichnet, dass** die erste Beschichtung (14) Polytetrafluorethylen umfasst.

4. Hohlraum (4) nach einem der vorhergehenden Ansprüche, **dadurch gekennzeichnet, dass** die Hohlraumwände (8a, 8b, 8c, 8d) aus Stahlblech mit niedrigem Kohlenstoffgehalt gefertigt sind.

5. Hohlraum (4) nach einem der vorhergehenden Ansprüche, **dadurch gekennzeichnet, dass** die Schicht (10) eine Aluminiumoxidschicht (10a) und eine intermetallische Schicht (10b) umfasst, die Aluminium und Eisen umfasst.

6. Hohlraum (4) nach einem der vorhergehenden Ansprüche, **dadurch gekennzeichnet, dass** die Oberfläche von mindestens einer der Hohlraumwände (8a, 8b, 8c, 8d) eine innere Oberfläche der Hohlraumwände (8a, 8b, 8c, 8d) ist.

7. Hohlraum (4) nach einem der vorhergehenden Ansprüche, **dadurch gekennzeichnet, dass** eine äußere Oberfläche von mindestens einer der Hohlraumwände (8a, 8b, 8c, 8d) eine zweite Beschichtung (16) umfasst.

8. Hohlraum (4) nach Anspruch 7, **dadurch gekennzeichnet, dass** die zweite Beschichtung (16) ein reflektierendes Material mit einem geringen Emissionsvermögen umfasst.

9. Hohlraum (4) nach einem der Ansprüche 7 oder 8, **dadurch gekennzeichnet, dass** die zweite Beschichtung (16) Aluminium umfasst.

10. Hohlraum (4) nach einem der vorhergehenden Ansprüche, **dadurch gekennzeichnet, dass** eine Dicke der Aluminium umfassenden Schicht (10) zwischen 15 und 25 µm liegt und/oder eine Dicke der ersten Beschichtung (14) zwischen etwa 30 und 60 µm liegt und/oder eine Dicke der zweiten Beschichtung (16) zwischen 30 und 60 µm liegt.

11. Kochgerät (2), insbesondere ein Ofen, umfassend:
- einen heizbaren Hohlraum (4),
- Heizelemente zum Heizen des Hohlraums (4) und
- eine Tür zum Schließen des Hohlraums (4), insbesondere zum Schließen einer zentralen Öffnung des Hohlraums,
**dadurch gekennzeichnet, dass**
der heizbare Hohlraum (4) ein Hohlraum (4) nach einem der Ansprüche 1 bis 10 ist.

12. Verfahren zum Fertigen eines Ofenhohlraums (4) für ein Kochgerät (2) nach einem der Ansprüche 1 bis 10, umfassend mindestens die folgenden Schritte:
- Bereitstellen von mindestens einer ersten Hohlraumwand (8a, 8b, 8c, 8d) und mindestens einer zweiten Hohlraumwand (8a, 8b, 8c, 8d), von denen jede mindestens eine Oberfläche aufweist, die mit einer Aluminium umfassenden Schicht (10) beschichtet ist,
- Bereitstellen des Hohlraums (4) durch Zusammenfügen der ersten Hohlraumwand (8a, 8b, 8c, 8d) und der zweiten Hohlraumwand (8a, 8b, 8c, 8d) oder durch Zusammenfügen der ersten Hohlraumwand (8a, 8b, 8c, 8d) und eines Gehäuseteils (18) mittels Laserschweißen;
- Aufbringen einer ersten Beschichtung (14), die aus einer Emaille mit einem Erweichungspunkt zwischen 450 Grad und 560 Grad gefertigt ist, auf die Schicht (10), nachdem die Komponenten des Hohlraums (4) mittels eines Lasers (20) miteinander verschweißt worden sind.

13. Verfahren nach Anspruch 12, **dadurch gekennzeichnet, dass** die Oberfläche eine innere Oberfläche des Hohlraums (4) ist und der Laser (20) die Hohlraumwände (8a, 8b, 8c, 8d) von einer Außenseite verschweißt.

## Revendications

1. Cavité (4) de four pour un appareil de cuisson (2), la cavité (4) de four comprenant
- des parois de cavité (8a, 8b, 8c, 8d) définissant un compartiment de cuisson (6) pour la cuisson d'un produit alimentaire, et
- une ouverture centrale pour le placement du produit alimentaire dans le compartiment de cuisson (6),
dans laquelle
- au moins une surface d'au moins l'une des parois de cavité (8a, 8b, 8c, 8d) est revêtue avec une couche (10) comprenant de l'aluminium, **caractérisée en ce que** ladite couche (10) est revêtue avec un premier revêtement (14) composé d'un émail possédant un point de ramollissement compris entre 450 °C et 560 °C.

2. Cavité (4) selon la revendication 1, **caractérisée en ce que** le premier revêtement (14) comprend de l'aluminium.

3. Cavité (4) selon l'une quelconque des revendications précédentes, **caractérisée en ce que** le premier revêtement (14) comprend un polytétrafluoroéthylène.

4. Cavité (4) selon l'une quelconque des revendications précédentes, **caractérisée en ce que** les parois de cavité (8a, 8b, 8c, 8d) sont composées d'une feuille d'acier à faible teneur en carbone.

5. Cavité (4) selon l'une quelconque des revendications précédentes, **caractérisée en ce que** la couche (10) comprend une couche (10a) d'oxyde d'aluminium et une couche intermétallique (10b) comprenant de l'aluminium et du fer.

6. Cavité (4) selon l'une quelconque des revendications précédentes, **caractérisée en ce que** ladite surface de l'au moins une des parois de cavité (8a, 8b, 8c, 8d) est une surface intérieure des parois de cavité (8a, 8b, 8c, 8d).

7. Cavité (4) selon l'une quelconque des revendications précédentes, **caractérisée en ce qu'**une surface extérieure d'au moins l'une des parois de cavité (8a, 8b, 8c, 8d) comprend un deuxième revêtement (16).

8. Cavité (4) selon la revendication 7, **caractérisée en ce que** le deuxième revêtement (16) comprend un matériau réflecteur possédant une faible émissivité.

9. Cavité (4) selon l'une quelconque des revendications 7 et 8, **caractérisée en ce que** le deuxième revêtement (16) comprend de l'aluminium.

10. Cavité (4) selon l'une quelconque des revendications précédentes, **caractérisée en ce qu'**une épaisseur de la couche (10) comprenant de l'aluminium est comprise entre 15 et 25 µm et/ou une épaisseur du premier revêtement (14) est comprise entre/d'environ 30 et 60 µm et/ou une épaisseur du deuxième revêtement (16) est comprise entre 30 et 60 µm.

11. Appareil de cuisson (2), en particulier four, comprenant
- une cavité (4) pouvant être chauffée,
- des éléments chauffants pour le chauffage de ladite cavité (4), et
- une porte pour la fermeture de la cavité (4), en particulier pour la fermeture d'une ouverture centrale de la cavité,
**caractérisé en ce que** la cavité (4) pouvant être chauffée est une cavité (4) selon l'une quelconque des revendications 1 à 10.

12. Procédé pour la fabrication d'une cavité (4) de four pour un appareil de cuisson (2) selon l'une quelconque des revendications 1 à 10 comprenant au moins les étapes suivantes :
- la mise à disposition d'au moins une première paroi de cavité (8a, 8b, 8c, 8d) et d'au moins une deuxième paroi de cavité (8a, 8b, 8c, 8d), chacune possédant au moins une surface qui est revêtue avec une couche (10) comprenant de l'aluminium,
- la mise à disposition de la cavité (4) en joignant ensemble la première paroi de cavité (8a, 8b, 8c, 8d) et la deuxième paroi de cavité (8a, 8b, 8c, 8d) ou en joignant ensemble la première paroi de cavité (8a, 8b, 8c, 8d) et une partie de boîtier (18) au moyen d'une soudure laser ;
- l'application d'un premier revêtement (14) composé d'un émail possédant un point de ramollissement entre 450 degrés et 560 degrés sur ladite couche (10) après que les composants de la cavité (4) ont été soudés ensemble au moyen d'un laser (20).

13. Procédé selon la revendication 12, **caractérisé en ce que**,
ladite surface est une surface intérieure de la cavité (4) et le laser (20) soude les parois de cavité (8a, 8b, 8c, 8d) depuis un côté extérieur.
